**Europäisches Patentamt**

**European Patent Office**

**Office européen des brevets**

(11) Veröffentlichungsnummer: **0 014 837**
**B1**

(12)

# EUROPÄISCHE PATENTSCHRIFT

(45) Veröffentlichungstag der Patentschrift:
**20.10.82**

(51) Int. Cl.³: **B 21 K 1/20**, F 16 K 27/10

(21) Anmeldenummer: **80100174.4**

(22) Anmeldetag: **15.01.80**

(54) **Verfahren zum Herstellen von Armaturengehäusen aus Metall und Vorrichtung zum Herstellen einer Gehäusehälfte.**

(30) Priorität: **15.02.79 DE 2905744**

(43) Veröffentlichungstag der Anmeldung:
**03.09.80 Patentblatt 80/18**

(45) Bekanntmachung des Hinweises auf die Patenterteilung:
**20.10.82 Patentblatt 82/42**

(84) Benannte Vertragsstaaten:
**BE DE FR GB IT LU NL**

(56) Entgegenhaltungen:

**AT-B-307 208**
**DE-A-2 020 815**
**DE-A-2 114 068**
**DE-U-1 859 877**
**GB-A-569 833**

(73) Patentinhaber: **Thyssen Industrie AG, Am Thyssenhaus 1, D-4300 Essen (DE)**

(72) Erfinder: **Müller, Erwin, Ing. grad., Auf dem Schnee 66, D-5804 Herdecke (DE)**
Erfinder: **Kollmann, Bernd, Dipl.-Ing., Dorneystrasse 41, D-5810 Witten-Stockum (DE)**
Erfinder: **Sonnabend, Ferdinand, Ing. grad, Baroper Schulstrasse 13a, D-4600 Dortmund 50 (DE)**
Erfinder: **Petzolt, Gert, Wagenfeldstrasse 16, D-4717 Nordkirchen 2 (DE)**
Erfinder: **Balz, Josef, Amtsstrasse 80, D-4620 Castrop-Rauxel (DE)**
Erfinder: **Walloschek, Bernhard, Sträterkampstrasse 10, D-5810 Witten-Stockum (DE)**
Erfinder: **Risse, Friedrich, Auf dem Aspei 32, D-4630 Bochum-Querenburg (DE)**

(74) Vertreter: **Eberhard, Friedrich, Dr., Am Thyssenhaus 1, D-4300 Essen (DE)**

## Verfahren zum Herstellung von Armaturengehäusen aus Metall und Vorrichtung zum Herstellen einer Gehäusehälfte

Die Erfindung bezieht sich auf ein Verfahren zum Herstellen von Armaturengehäusen wie Schiebergehäusen aus Metall, insbonndere Stahl, durch medium- und druckdichtes Verschweissen zweier Gehäusehälften miteinander, deren Verformen jeweils von einer ebenflächigen Platine ausgeht, die spätestens in der Endphase der Verformung zu einer Gehäusehälfte mit einer seitlichen Durchbrechung versehen wird, deren Wandungen zu flansch- bzw. rohrstutzenförmigen, zumindest nach aussen sich koaxial oder annähernd koaxial erstreckenden Wulsten umgestaltet werden. Ferner sich die Erfindung auf eine Vorrichtung mit Presswerkzeugen zum Herstellen einer Gehäusehälfte eines aus dem Verfahren hervorkommenden Armaturengehäuses, insbesondere eines Schiebergehäuses, die unter Erzeugung einer seitlichen Durchbrechung der Gehäusehälfte sowohl den Sitz für den Sperrkörper als auch einen nach aussen weisenden, flansch- oder rohrstutzenförmigen Wulst für den Gehäuserohrstutzen zumindest während des Pressvorganges bilden.

Es ist bekannt, Schiebergehäuse mit grossen Nennweiten von z.B. 200 bis etwa 800 Millimetern aus zwei Gehäusehälften herzustellen, die durch eine Längsschweissnaht mediumdicht miteinander verbunden sind. Jede Gehäusehälfte ist bei dieser bekannten Bauart mit einer Aushalsung versehen, mit der je ein Gehäuserohrstutzen durch Schweissen dicht verbunden ist. Im Innern des Gehäuses ist mit den im Kreisbogen nach auswärts ausgehalsten Teilen je ein Rohrstutzen durch Schweissen verbunden, wobei die beiden einander zugekehrten Stirnseiten dieser Rohrstutzen — ggf. mit aufgeschweissten Ventilsitzringen — die Führung und den Ventilsitz für einen Absperrkörper bilden.

Nachteilig bei diesem vorbekannten Schieber ist, dass die innenliegenden Schweissnähte der im Schiebergehäuse angeordneten, die Ventilsitzflächen aufweisenden Rohrstutzen durch Schweissnähte befestigt sind, die nicht ultraschallprüffähig bzw. röntgenfähig sind. Deshalb sind solche Schieber überall dort nicht zu verwenden, wo es darauf ankommt, besondere Sicherheitsbedingungen zu erfüllen, beispielsweise in Kernkraftwerken.

Es ist ferner durch die DE-A-20 20 815 bei der Herstellung eines Schiebergehäuses, das ebenfalls aus zwei gepressten Gehäusehälften zusammengesetzt und verschweisst wird, bekannt, für die Gehäusehälften jeweils von einer Platine auszugehen und die Aushalsung jeder Gehäusehälfte gleich rohrstutzenförmig und zusammen mit dem Ventilsitz zu pressen. Ein derartiges Schiebergehäuse besitzt keine innenliegenden Schweissnähte mehr und könnte für eine Verwendung in Kernkraftwerken röntgen- und/oder ultraschallgeprüft werden. Der Einsatz bleibt dennoch beschränkt, denn das bekannte Verfahren kann keine Armaturengehäuse für grosse und sehr grosse Nennweiten hervorbringen.

Der Erfindung liegt daher die Aufgabe zugrunde, ein Verfahren der eingangs genannten Art für grosse und sehr grosse Rohrnennweiten zu schaffen, das die Nachteile vorbekannter Bauarten beseitigt und bei einfacher Herstellung innenliegende Schweissnähte vermeidet und die Prüfung etwaiger doch noch vorhandener Schweissnähte durch Ultraschall und durch Röntgen ermöglicht.

Darüber hinaus liegt der Erfindung die Aufgabe zugrunde, auch eine Vorrichtung zu schaffen, die konstruktiv einfach ist und die Herstellung von grosse bis sehr grosse Nennweiten besitzenden Gehäusehälften ermöglicht, die bei dem Verfahren in Anwendung kommen.

Hinsichtlich des Verfahrens wird die Aufgabe durch die im Anspruch 1 wiedergegebenen Merkmale gelöst.

Nach dem Verfahren entstehen zunächst auf verschiedene, vorteilhafte Arten und Weisen Gehäusehälften, die sich dann zu einem Armaturengehäuse verbinden lassen.

Zum einen kann von einer ebenflächigen Platine mit einem darin angeordneten Loch verhältnismässig geringen Durchmessers ausgegangen werden, woraufhin diese ebenflächige Platine in einer Presse entsprechend dem Verlauf der Konturen der Gehäusehälfte verformt wird. Die flanschförmigen Wulste werden dann noch innerhalb des Verformungswerkzeuges, d.h. unter gleichzeitiger Stützung des Gesamtbereiches um das Loch herum, angeformt.

Es ist aber auch möglich, die Platine erst in der Endphase des Verformens der Gehäusehälfte zu lochen und die Wulste entsprechend anzubringen.

Durch den Anspruch 1 werden aber auch solche Verfahrensweisen geschützt, bei denen die Wandungen einer Öffnung in einer ebenflächigen Platine derart verformt werden, dass diametral zueinander angeordnete flanschförmige Wulste entstehen, die sich rechtwinklig zur Platinenoberfläche auf beiden Seiten dieser Platine erstrecken. Alsdann wird die betreffende Platine mit der auf den Durchmesser der später aussen am Gehäuse anzuschweissenden Rohrstutzen vergrösserten Öffnung in geeignete Verformungswerkzeuge eingegeben, insbesondere in eine Presse gelegt, in welcher die noch ebenflächigen Teile der Platine entsprechend den Konturen der Gehäusehäfte verformt werden. Damit sich die angeformten Wulste nicht verziehen oder in sonstiger Weise beschädigt werden, fahren vor dem Verformen der Platine Ober- und Untergesenke auf beiden Seiten gegen die Platine und stützen und halten die Wulste und die in diesem Bereich befindlichen Oberflächenteile vorzugsweise allseitig.

Aus den Verformungswerkzeugen werden dann die komplett geformten Gehäusehalbschalen herausgenommen. Gegebenenfalls brauchen die angeformten Wulste nur noch entzundert zu werden. Hierzu kann es in einigen Fällen genügen, wenn die dem Absperrkörper zugekehrten Wandungsteile des flanschförmigen Wulstes, z.B. durch Schleifen geringfügig nachgearbeitet werden.

Ein Vorteil dieser Verfahrensweise ist, dass hierbei innenliegende Schweissnähte vermieden werden. Lediglich mit dem nach aussen weisenden Teil des angeformten Wulstes wird ein Rohrstutzen durch Schweissen verbunden. Dabei lässt sich der anzustauchende Teil in seinen Abmessungen jedoch ohne weiteres derart bestimmen, dass die Schweissnaht in ausreichend grossem Abstand von der äusseren Mantelfläche des Armaturengehäuses angeordnet ist, so dass ohne weiteres z.B. ein Film angelegt werden kann, um die Schweissnaht nach einem Durchstrahlungsverfahren zu prüfen.

Ausserdem ist es aber dank der im gesamten Bereich der Wulste befindlichen planen Oberflächenteile der Gehäusehälften auch möglich, die Schweissnaht für den Rohrstutzen ultraschallzuprüfen, so dass sich die nach dem erfindungsgemässen Verfahren hergestellten Armaturengehäuse auch in Betrieben mit erhöhten Sicherheitsanforderungen einsetzen lassen. Auf diesem Einsatzgebiet ist dann nach beiden Prüfmethoden auch das Nachprüfen der Schweissnähte an den Gehäusen nach deren Inbetriebnahme durchführbar.

In den Ansprüchen 2 bis 4 sind vorteilhafte Verfahrensweisen beschrieben.

Bei Anwendung des Verfahrens gemäss Anspruch 2 werden gleichzeitig mit dem Herstellen der flanschartigen Wulste auch etwaige Anschweissfasen an den äusseren Stirnseiten der Wulste mit angeformt werden.

Damit einhergehen kann nach Anspruch 3 die Verformung der Wulste durch Anwalzen oder Anstauchen. Beispielsweise ist es möglich, die dem Gehäuseinnern zugekehrten Stirnflächen des angeformten Wulstes entsprechend dem jeweils gewünschten Verlauf weiterzuformen oder umzuformen, beispielsweise diesen Teil des Wulstes ebenflächig zu pressen, so dass auf diesen Stirnwandbereich später eine geeignete Panzerung oder ein Ventilsitz aufgebracht werden kann.

In manchen Fällen kann ein Nachformen der Wulste gemäss Anspruch 4 vorteilhaft sein.

Die Aufgabe hinsichtlich der Vorrichtungsmerkmale wird durch die im Anspruch 5 wiedergegebenen Merkmale gelöst. Die Vorrichtung nach diesem Anspruch ist robust und besteht aus relativ wenigen Einzelheiten, durch die sich grosse bis sehr grosse Schieber von z.B. 200 bis 800, vorzugsweise 250 bis 600 Millimeter, Nennweite herstellen lassen.

Die Vorrichtung kann entweder gemäss Anspruch 6 aus zwei Gesenkpaaren bestehen oder gemäss Anspruch 7 ein Gesenkpaar und eine in dieses einbringbare Rolle enthalten.

In der Zeichnung ist die Erfindung an mehreren Ausführungsbeispielen — teils schematisch — veranschaulicht. Es zeigen:

Fig. 1 einen Längsschnitt durch zwei mit Abstand zueinander angeordnete Gehäusehälften, noch nicht zusammengeschweisst;

Fig. 2 eine Seitenansicht zu Fig. 1;

Fig. 3 eine Draufsicht zu Fig. 2;

Fig. 4 einen Querschnitt nach der Linie IV-IV der Fig. 1, wobei Gehäuserohrstutzen lediglich mit strichpunktierten Linien angedeutet sind, ebenfalls noch nicht angeschweisst;

Figuren 5 - 16 verschiedene Verfahrensstufen beim Herstellen von Gehäusehälften, und zwar bei verschiedenen Ausführungsbeispielen.

In der Zeichnung ist die Erfindung in Anwendung auf ein grosses Schiebergehäuse veranschaulicht, das unter erhöhten Sicherheitsbedingungen, z.B. in Kernkraftwerken, einsetzbar ist.

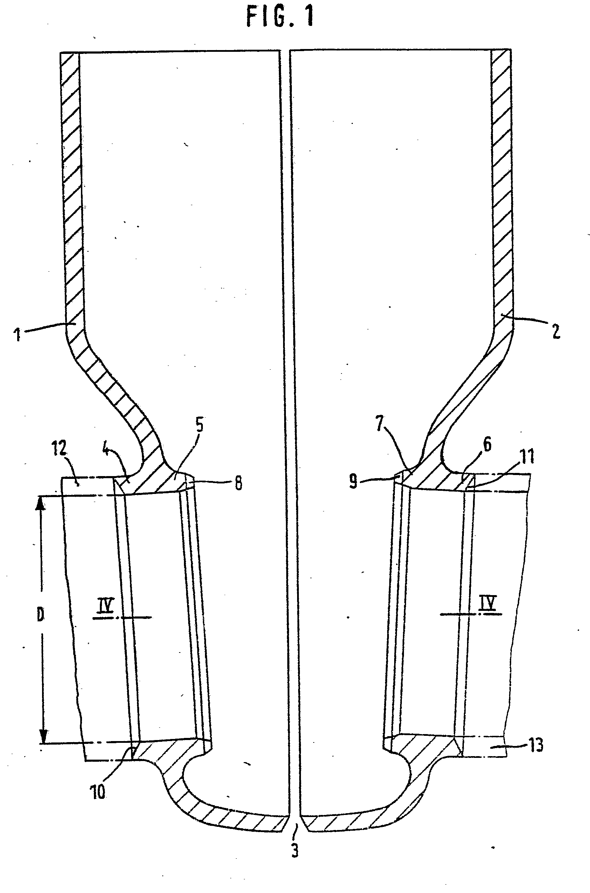

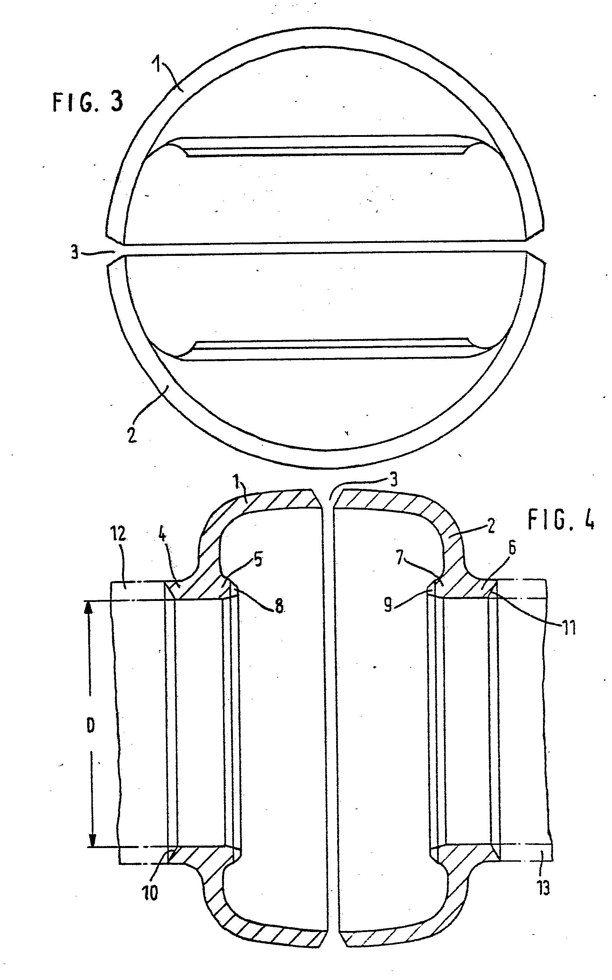

In den Figuren 1 bis 4 sind mit den Bezugszeichen 1 und 2 zwei Gehäusehälften bezeichnet, die durch eine Längsschweissnaht — bei 3 — medium- und druckdicht miteinander verbunden werden.

Diese Schweissnaht 3 ist sowohl ultraschallprüffähig wie auch röntgenfähig, da auch für ein nicht dargestelltes Ultraschallprüfgerät seitlich ein ausreichend grosser Anfahrweg zur Verfügung steht, so dass es zu keinen Verfälschungen der Prüfungsergebnisse kommen kann.

Jede Gehäusehälfte 1 bzw. 2 weist einen mit der betreffenden Gehäusehälfte materialmässig einstückig ausgebildeten, sich nach innen und aussen erstreckenden, flanschförmigen bzw. rohrförmigen Wulst 4, 5 bzw. 6, 7 auf, wobei die Wulste 4, 5 und 6, 7 koaxial zueinander angeordnet sein können und bei der dargestellten Ausführungsform den gleichen lichten Durchmesser D aufweisen. Bei der Ausführungsform nach Fig. 1 schneiden sich die Längsachsen der Wulste 4, 5 und 6, 7 unter einem stumpfen Winkel, da diese Längsachsen z.B. je unter einem Winkel von etwa 3° zur Horizontalen geneigt sind.

Die nach innen vorspringenden flansch- oder rohrförmigen Wuste 5 und 7 sind an ihren einander zugekehrten Stirnflächen mit je einer durch Auftragsschweissen hergestellten, verschleissarmen Panzerung 8 bzw. 9 versehen, mit denen ein nicht dargestellter Absperrschieber dichtend zusammenwirkt, der durch ebenfalls nicht dargestellte Betätigungsorgane, z.B. eine Spindel mit Handrad o. dgl., zu bedienen ist. Hier können auch Ventilringe angeschweisst sein. Ausserdem können diese Stirnflächen der Wulste 5, 7 selbst als Ventilsitze ausgebildet werden.

Die Wulste 4 und 6 sind an ihren einander abgekehrten Stirnseiten je mit einer Anfasung 10 bzw. 11 versehen, womit je ein lediglich schematisch angedeuteter Gehäuserohrstutzen 12 bzw. 13 durch Schweissnähte medium- und druckdicht zu verbinden ist. Diese, die Gehäuserohrstutzen 12 und 13 mit den Wulsten 4 und 6 dicht verbindenden Schweissnähte sind ebenfalls voll ultraschallprüffähig und röntgenfähig. Für den nicht dargestellten Prüfkopf eines Ultraschallprüfgerätes steht ein ausreichend grosser Anfahrweg zur Verfügung, da die jeweilige Schweissnaht durch den von der seitlichen Gehäusewand hervorragenden Wulst 4 bzw. 6 ausreichend weit entfernt ist, so dass es zu keinen verzerrten Prüfungsergebnissen kommen kann.

Nachfolgend sollen anhand einiger beispielsweiser Verfahrensweisen die Herstellung eines Armaturengehäuses, insbesondere Schiebergehäuse wie es in den Figuren 1 bis 4 dargestellt ist, näher erläutert werden.

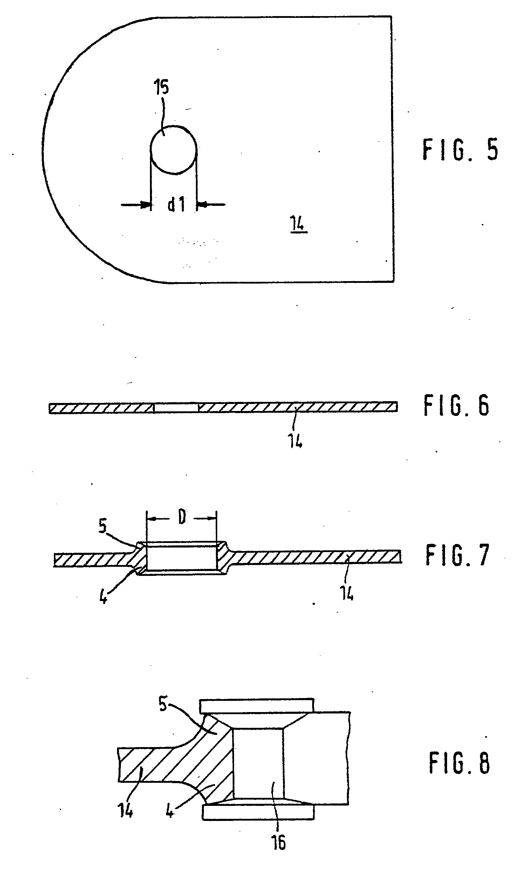

Es wird zunächst Bezug genommen auf die Figuren 5 bis 12.

Ausgegangen wird von einer ebenflächigen Platine 14, in die ein Loch 15 gebohrt oder eingebrannt wird, dessen Durchmesser $d_1$ geringer ist als der lichte Durchmesser der Gehäuserohrstutzen 12 bzw. 13 (Fig. 1).

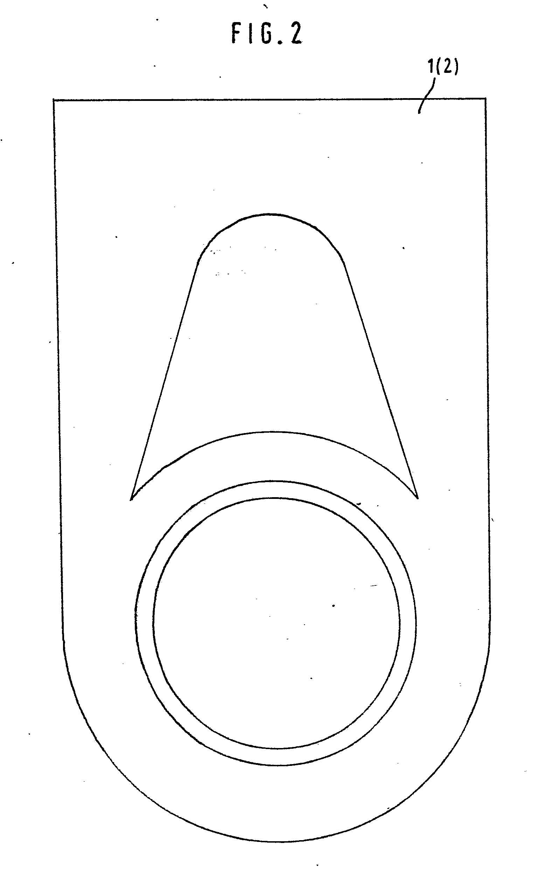

Anschliessend wird das Loch 15 durch geeignete Verformungswerkzeuge 16, insbesondere Rollen aufgeweitet bzw. angestaucht, und zwar bis auf den lichten Durchmesser D der Gehäuserohrstutzen bzw. der insbesondere aus den Figuren 1 und 2 ersichtlichen lichten Durchmesser D der dort dargestellten Wulste 4, 5 bzw. 6, 7.

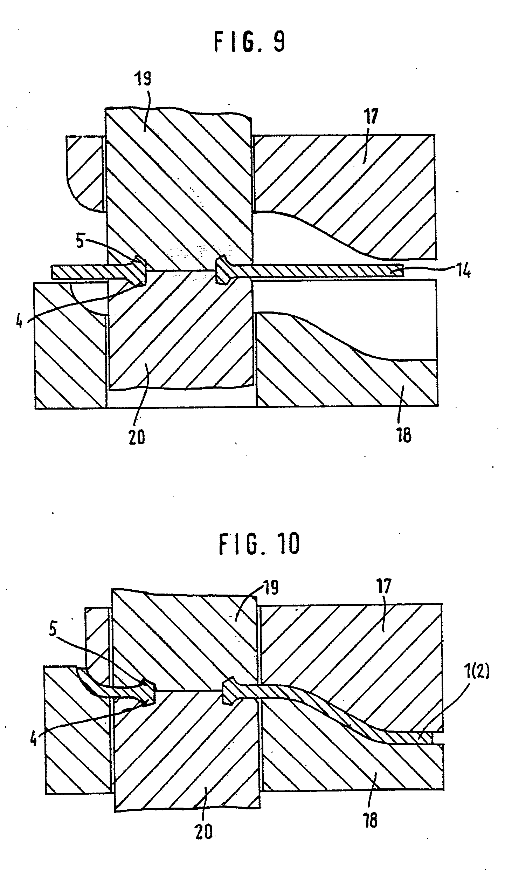

Danach wird die so vorbehandelte Platine 14 in ein Verformungswerkzeug, bestehend aus Ober- und Untergesenk 17 bzw. 18 eingebracht, dessen einander zugekehrte Konturen den Konturen einer aus Fig. 1 ersichtlichen Gehäusehälfte 1 bzw. 2 entsprechen. Vor dem Zusammenfahren des Ober- und Untergesenkes 17 und 18 in die aus Fig. 10 ersichtliche Position und vor dem Verformen der Platine 14 zu den Konturen der Gehäusehälften 1 oder 2, werden die rohrstutzenförmigen Wulste 4, 5 bzw. 6, 7 durch ein anderes, ebenfalls aus einem Ober- und Untergesenk bestehendes Verformungswerkzeug 19 bzw. 20 ergriffen und abgestützt. Dabei wird bei dieser Ausführungsform der gesamte Bereich der rohrstutzenförmigen Wulste 4, 5 bzw. 6, 7 innen und aussen durch das Unter- und Obergesenk 19 und 20 gehalten und abgestützt, so dass beim anschliessenden Gegeneinanderfahren des Ober- und Untergesenkes 17 und 18 in die aus Fig. 10 ersichtliche Position sich die Wulste 4, 5 bzw. 6, 7 nicht verziehen oder in sonstiger Weise deformieren.

Danach werden die Werkzeuge 17, 18 sowie 19, 20 wieder auseinandergefahren und die betreffende Gehäusehälfte 1 bzw. 2 wird aus den Werkzeugen herausgenommen und ist fertig zum Zusammenschweissen mit einer ebensolchen Gehäusehälfte zu einem Armaturengehäuse, insbesondere Schiebergehäuse. Im Bedarfsfalle können noch etwaige Fasen zum Anbringen von Schweissnähten hergestellt oder nachbearbeitet, insbesondere entzundert werden. Es ist auch möglich, dass der innere, rohrstutzen- oder flanschförmige Wulst 5 bzw. 7 beim Gegeneinanderfahren der Werkzeuge 19 bzw. 20 nachgeformt, z.B. ebengepresst, wird, bevor anschliessend die betreffende Panzerung 8 bzw. 9 oder ein Ventilsitzring aufgebracht werden kann.

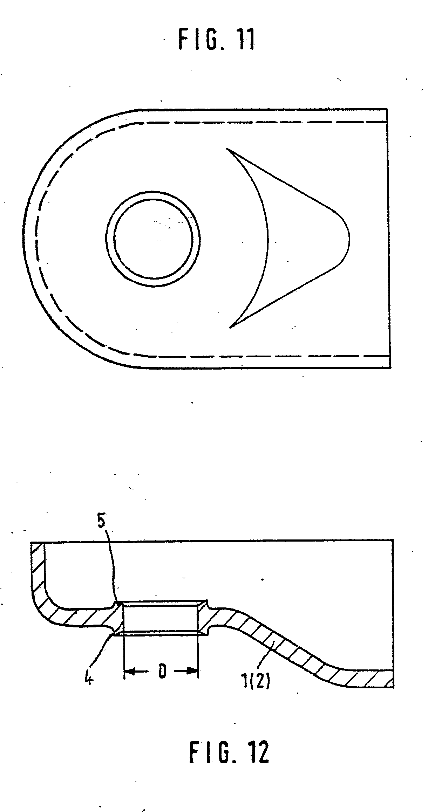

Die Figuren 11 und 12 zeigen fertige Gehäuseschalen in der Seitenansicht bzw. im Schnitt.

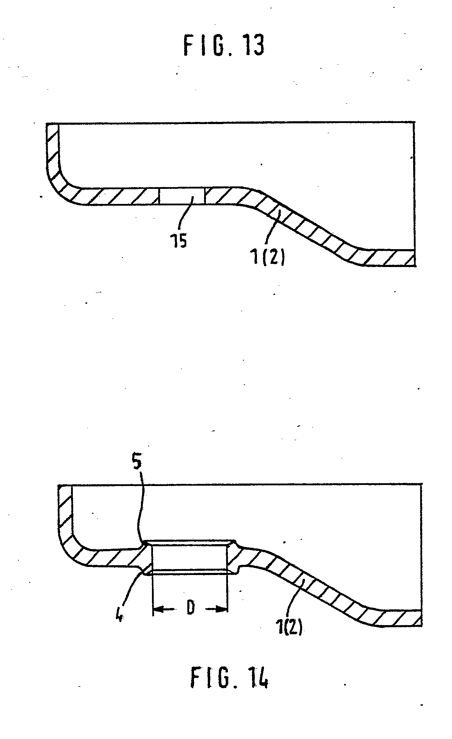

Nach Fig. 13 wird ebenfalls von einer ebenflächigen Platine 14 ausgegangen, und zwar wie sie in Fig. 5 dargestellt ist. Anschliessend wird das Loch bzw. die Durchbrechung 15 aufgewulstet, so dass die flansch- bzw. rohrstutzenartigen Wulste 4, 5 bzw. 6, 7 (Fig. 1 und 2) entstehen. Die Wulste können — wie bei der Verfahrensweise nach den Figuren 5 bis 12 — angewalzt oder angestaucht sein. Dieses Anwulsten kann ausserhalb des eigentlichen Pressengesenkes (Fig. 9) oder im Gesenk selbst geschehen, worauf nachfolgend noch eingegangen wird.

Es ist auch möglich, die betreffende Gehäusehälfte 1 bzw. 2 aus einer ebenflächigen Platine bzw. einem Blech 14 gemäss Fig. 13 zu fertigen und zu lochen. Anschliessend werden die betreffenden Wulste 4, 5 bzw. 6, 7 an der betreffenden, schon fertigen Gehäusehälfte 1 bzw. 2 durch ein aus Obergesenk 21 und einem Untergesenk 22 bzw. Widerlager 23 bestehendes Verformungswerkzeug angestaucht und gleichzeitig auch die betreffende Schweissfase — z.B. 10 — für den Gesäuserohrstutzen o. dgl. angeformt.

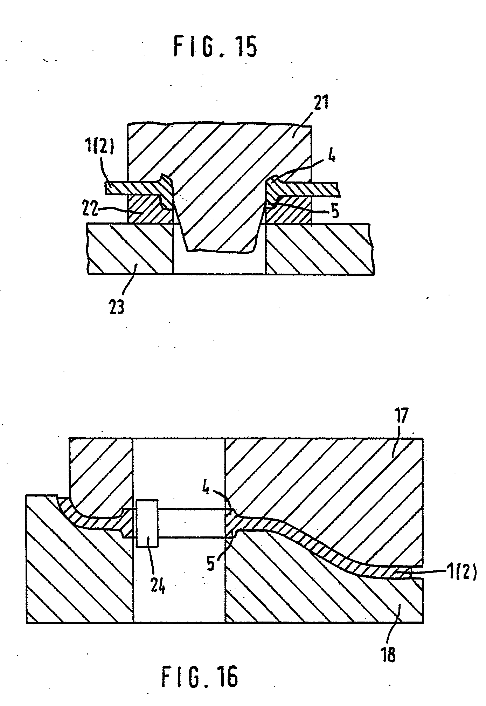

Es ist aber gemäss Fig. 15 auch möglich, mittels des Verformungswerkzeuges an der noch ebenflächigen, also noch nicht zu einer Gehäusehälfte 1 bzw. 2 verformten Platine 14 die Wulste 4, 5 bzw. 6, 7 anzustauchen.

Bei der Ausführungsform nach Fig. 16 erfolgt das Anformen der flansch- bzw. rohrstutzenförmigen Wulste 4, 5 bzw. 6, 7 innerhalb der Verformungswerkzeuge 17, 18 also wenn die Platine 14 zu der betreffenden Gehäuseschale verformt worden ist. Hierzu dienen bei der dargestellten Ausführungsform Rollen 24.

Bezugzeichenliste

1  Gehäusehälfte
2  Gehäusehälfte
3  Längsschweissnaht
4  Wulst
5  Wulst
6  Wulst
7  Wulst
8  Panzerung
9  Panzerung
10  Anfasung
11  Anfasung
12  Gehäuserohrstutzen
13  Gehäuserohrstutzen
14  Platine
15  Loch, Durchbrechung
16  Verformungswerkzeug, Rolle
17  Obergesenk
18  Untergesenk
19  Obergesenk
20  Untergesenk
21  Obergesenk
22  Untergesenk
23  Widerlager
24  Verformungswerkzeug, Rolle
D  lichter Durchmesser
$d_1$  Lochdurchmesser

**Patentansprüche**

1. Verfahren zum Herstellen von Armaturengehäusen wie Schiebergehäusen aus Metall, insbesondere Stahl, durch medium- und druckdichtes Verschweissen zweier Gehäusehälften (1, 2) miteinander, deren Verformen jeweils von einer ebenflächigen Platine (14) ausgeht, die spätestens in der Endphase der Verformung zu einer Gehäusehälfte (1 oder 2) mit einer seitlichen Durchbrechung (15) versehen wird, deren Wandungen zu flansch- bzw. rohrstutzenförmigen, zumindest nach aussen sich koaxial oder annähernd koaxial erstreckenden Wulsten (4, 6) umgestaltet werden, dadurch gekennzeichnet, dass die im gesamten Bereich der Durchbrechung (15) bzw. der Wulste (4 bzw. 6) befindlichen und für einen Schweissnaht-Prüfkopf eines Ultraschallprüfgerätes einen ausreichend grossen Anfahrweg gewährenden planen Oberflächenteile auf beiden Seiten durch ein Ober- (19 bzw. 17) und ein Untergesenk (20 bzw. 18) deformationsfrei gehalten und abgestützt werden, während der Rand der Durchbrechung (15) in der abgeflachten Gehäusehälfte (1 oder 2) zu beiderseitigen Wulsten (4, 5 bzw. 6, 7) bzw. die Platine (14) mit den bereits ausgeformten Wulsten (4, 5 bzw. 6, 7) zu der abgeflachten Gehäusehälfte (1 oder 2) verformt wird, und dass der nach aussen abstehende Wulst (4 oder 6) in einen angeschweissten Gehäuserohrstutzen (12 bzw. 13) übergeht.

2. Verfahren nach Anspruch 1, dadurch gekennzeichnet, dass bei dem Herstellen der Wulste (4, 5 bzw. 6, 7) oder bei deren Halterung im anschliessenden Verformungswerkzeug für die Platine (14) je eine Anfasung (10 bzw. 11) an den jeweils nach aussen weisenden Stirnseiten der Wulste (4 bzw. 6) angeformt wird.

3. Verfahren nach Anspruch 1 oder 2, dadurch gekennzeichnet, dass die Wulste (4, 5 bzw. 6, 7) angewalzt oder angestaucht werden und dass die dabei entstandenen, dem Innern des Armaturengehäuses zugekehrten freien Stirnseiten anschliessend ebenflächig oder konkav bzw. wannenförmig nachgeformt werden, woraufhin zur Bildung des Ventilsitzes eine geeignete Panzerung (8 bzw. 9) oder Ventilringe aufgebracht werden.

4. Verfahren nach Anspruch 3, dadurch gekennzeichnet, dass das Nachformen der dem Inneren des Armaturengehäuses zugekehrten freien Stirnseiten der Wulste (4, 5 bzw. 6, 7) durch die Wulste (4, 5 bzw. 6, 7) stützende und ergreifende Ober- und Untergesenke (19, 20) während der Verformung der Platine (14) in den Ober- und Untergesenken (17, 18) erfolgt.

5. Vorrichtung mit Presswerkzeugen zum Herstellen einer Gehäusehälfte (1 oder 2) eines aus dem Verfahren nach Anspruch 1 oder einem der folgenden hervorkommenden Armaturengehäuses, insbesondere eines Schiebergehäuses, die unter Erzeugung einer seitlichen Durchbrechung (15) der Gehäusehälfte (1 oder 2) sowohl den Sitz für den Sperrkörper als auch einen nach aussen weisenden, flansch- oder rohrstutzenförmigen Wulst (4 bzw. 6) für den Gehäuserohrstutzen (12 oder 13) zumindest während des Pressvorganges bilden, dadurch gekennzeichnet, dass ein Ober- und Untergesenk (17, 18 oder 19, 20) vorgesehen sind, von denen das eine Gesenk (20 oder 18) an der Stelle des Wulstes (4 bzw. 6) eine Ausnehmung und das andere Gesenk (19 oder 17) für einen nach innen weisenden, koaxialen Wulst (5 bzw. 7) der Gehäusehälfte (1 oder 2) ebenfalls eine Ausnehmung aufweist, und die einander gegenüberliegenden Arbeitsflächen der Gesenke (17, 18 oder 19, 20) im gesamten Bereich der Durchbrechung (15) bzw. der Wulste (4, 5 bzw. 6, 7) plan ausgebildet sind und gegen die dazwischenliegende Wandung der Gehäusehälfte (1 oder 2) bis zu deren Entformung stützend anliegen.

6. Vorrichtung nach Anspruch 5, dadurch gekennzeichnet, dass zwei Gesenkpaare (19, 20 und 17, 18) vorhanden sind, von denen das eine Gesenkpaar 19, 20) einen den Wulsten (4, 5 bzw. 6, 7) und dem anschliessenden planen Wulstbereich entsprechenden Hohlraum aufweist und von dem anderen Gesenkpaar (17, 18) umgeben ist, das einen den übrigen Bereichen der Gehäusehälfte (1 oder 2) entsprechenden Hohlraum besitzt.

7. Vorrichtung nach Anspruch 5, dadurch gekennzeichnet, dass eine Rolle (24) in das Ober- und Untergesenk (17, 18) einbringbar ist und mit den Ausnehmungen für die Wulste (4, 5 bzw. 6, 7) zusammenarbeitet.

**Claims**

1. Process for producing casings for fittings, such as slide valve casings, made of metal, especially steal, as a result of medium-tight and pressure-tight welding to one another of two casing halves (1, 2), which are each formed from a plane blank (14) which, at the latest in the final phase of forming into a casing half (1 or 2), is provided with a lateral perforation (15), the walls of which are reshaped into flangeshaped or pipe-connection shaped beads (4, 6) extending at least outwards co-axially or approximately co-axially, characterised in that the plane surface parts, located in the entire region of the perforation (15) or of the beads (4 or 6) and allowing a sufficiently large approach path for a weld-seam test head of an ultrasonic test instrument, are held and supported, free of deformation, on both sides by an upper die (19 and 17 respectively) and a lower die (20 and 18 respectively), whilst the edge of the perforation (15) in the flattened casing half (1 or 2) is formed into beads (4, 5 and 6, 7 respectively) on both sides or the blank (14) together with the already shaped beads (4, 5 and 6, 7 respectively) is formed into the flattened casing half (1 or 2), and in that the bead (4 or 6) projecting outwards joins into a welded-on casing pipe-nozzle (12 or 13).

2. Process according to Claim 1, characterised in that, during the production of the beads (4, 5 and 6, 7 respectively) or during their retention in the connected forming tool for the blank (14), a chamfer (10 and 11 respectively) is shaped on the respective outwardly pointing end faces of the beads (4 and 6 respectively).

3. Process according to Claim 1 or 2, characterised in that the beads (4, 5 and 6, 7 respectively) are rolled on or upset, and in that the free end faces arising as a result, which face the interior of the fitting casing, are subsequently reshaped plane or concave or trough-shaped respectively, whereupon a suitable hard-facing (8 and 9 respetively) or valve rings are attached to from the valve seat.

4. Process according to Claim 3, characterised in that the reshaping of the free end faces of the beads (4, 5 and 6, 7 respetively), which face the interior of the fitting casing, is carried out by upper and lower dies (19, 20) supporting and gripping the beads (4, 5 and 6, 7 respectively) during shaping of the blank (14) in the upper and lower dies (17, 18).

5. Apparatus with press tools for producing a casing half (1 or 2) of a fitting casing, especially a valve casing, arising from the process according to Claim 1 or one of the following Claims, these press tools forming, by producing a lateral perforation (15) in the casing half (1 or 2), both the seat for the valve element and an outwardly pointing, flange-shaped or pipe connection shaped bead (4 or 6) for the casing pipe connection (12 or 13), at least during the pressing operation, characterised in that an upper die and lower die (17, 18 or 19, 20) are provided, one die (20 or 18) of which has a recess at the location of the bead (4 or 6) and the other die (19 or 17) also has a recess for an inwardly pointing co-axial bead (5 or 7) of the casing half (1 or 2), and the opposing working faces of the dies (17, 18 or 19, 20) are made plane in the entire region of the perforation (15) and of the beads (4, 5 and 6, 7 respectively) and rest supportively against the wall of the casing halves (1 or 2) located between them until the latter are released from the mould.

6. Apparatus according to Claim 5, characterised in that there are two pairs of dies (19, 20 and 17, 18), one pair of dies (19, 20) of which has a cavity corresponding to the beads (4, 5 and 6, 7 respectively) and to the adjoining plane bead region and is surrounded by the other pair of dies (17, 18) which has a cavity corresponding to the remaining regions of the casing half (1 or 2).

7. Apparatus according to Claim 5, characterised in that a cylinder (24) can be introduced into the upper and lower dies (17, 18) and interacts with the recesses for the beads (4, 5 and 6, 7 respectively).

**Revendications**

1. Procédé de fabrication de corps de robinet, par exemple de vanne, en métal, en particulier en acier, par assemblage par soudage de façon étanche aux fluides et à la pression de deux demi-corps (1, 2) formés chacun à partir d'un flan plat (14) qui, au plus tard dans la phase finale de sa transformation en un demi-corps (1 ou 2), est pourvu d'un trou latéral (15) dont les parois sont transformées en bourrelets en forme de bride ou de tubulure (4, 6) coaxiaux, ou approximativement coaxiaux, s'étendant au moins vers l'extérieur, caractérisé par le fait que les parties de surface planes situées dans toute la zone du trou (15) ou des bourrelets (4 ou 6) et offrant un chemin d'accès suffisant à la tête d'un appareil de contrôle de soudures par ultrasons sont tenues et soutenues des deux côtés, sans déformation, par une matrice supérieure (19 ou 17) et une matrice inférieure (20 ou 18), tandis que le bord du trou (15) du demi-corps (1 ou 2) aplati est transformé en bourrelets (4, 5 ou 6, 7) des deux côtés ou bien le flan (14) avec les bourrelets (4, 5 ou 6, 7) déjà formés est transformé en demi-corps aplati (1 ou 2), et que le bourrelet dirigé vers l'extérieur (4 ou 6) est suivi d'une tubulure de corps (12 ou 13) soudée à lui.

2. Procédé selon la revendication 1, caractérisé par le fait que, pendant la réalisation des bourrelets (4, 5 ou 6, 7) ou pendant que ceux-ci sont tenus dans l'outil de formage du flan (14) contigu, un chanfrein (10 ou 11) est réalisé sur le côté frontal extérieur des bourrelets (4 ou 6).

3. Procédé selon l'une des revendications 1 et 2, caractérisé par le fait que les bourrelets (4, 5 ou 6, 7) sont réalisés par moletage ou refoulement et que leurs côtés frontaux libres dirigés vers l'intérieur du corps du robinet formés sont ensuite rendus plans ou bien concaves ou en forme de cuvette, après quoi un blindage approprié (8 ou 9) ou des bagues y sont appliquées pour la formation du siège de corps.

4. Procédé selon la revendication 3, caractérisé par le fait que le formage des côtés frontaux libres des bourrelets (4, 5 ou 6, 7) dirigés vers l'intérieure du corps de robinet par les matrices supérieure et inférieure (19, 20) supportant et prenant les bourrelets a lieu pendant le formage du flan (14) dans les matrices supérieure et inférieure (17, 18).

5. Dispositif à outils de formage à la presse pour la fabrication d'un demi-corps (1 ou 2) d'un corps de robinet venant du procédé selon l'une des revendications 1 à 4, en particulier d'un corps de vanne, lesquels outils, en produisant un trou latéral (15) du demi-corps (1 ou 2), forment au moins pendant l'opération de formage à la presse à la fois le siège d'appui de l'obturateur et un bourrelet en forme de bride ou de tubulure dirigé vers l'extérieur (4 ou 6) pour la tubulure de corps (12 ou 13), caractérisé par le fait qu'il est prévu une matrice supérieure et une matrice inférieure (17, 18 ou 19, 20) dont l'une (20 ou 18) présente un évidement à l'endroit du bourrelet (4 ou 6) et l'autre (19 ou 17) présente également un évidement pour un bourrelet coaxial dirigé vers l'intérieur (5 ou 7) du demi-corps (1 ou 2), et que les surfaces actives en regard des matrices (17, 18 ou 19, 20) sont planes dans toute la zone du trou (15) et des bourrelets (4, 5 ou 6, 7) et s'appuient contre la paroi du demi-corps (1 ou 2) située entre elles jusqu'à l'éjection de celui-ci.

6. Dispositif selon la revendication 5, caractérisé par le fait qu'il existe deux paires de matrices (19, 20 et 17, 18) dont l'une (19, 20) présente une cavité correspondant aux bourrelets (4, 5 ou 6, 7) et à la zone plane contiguë et est entourée par l'autre (17, 18), laquelle présente une cavité correspondant aux autres parties du demi-corps (1 ou 2).

7. Dispositif selon la revendication 5, caractérisé par le fait qu'un galet (24) est placé dans les matrices supérieure et inférieure (17, 18) et coopère avec les évidements correspondant aux bourrelets (4, 5 ou 6, 7).

# FIG. 1

# FIG. 2

1(2)

FIG. 3

1

3

2

FIG. 4

1    3

12   4    5

8

7    6

9

11

D

10

13

FIG. 5

FIG. 6

FIG. 7

FIG. 8

## F I G. 9

## F I G. 10

## FIG. 11

## FIG. 12

FIG. 13

15

1(2)

5

4

D

1(2)

FIG. 14

# FIG. 15

# FIG. 16